# EUROPEAN PATENT APPLICATION

(11) **EP 2 620 121 A1**
(43) Date of publication of application: **31.07.2013**
(21) Application number: 11826775.6
(22) Date of filing: 14.09.2011
(51) Int. Cl.: A61C 1/05

(54) **AIR TURBINE HANDPIECE**

(30) Priority: 29.03.2011 JP 2011071913; 22.09.2010 JP 2010211589
(71) Applicant: The Yoshida Dental Mfg. Co., Ltd., Sumida-ku Tokyo 130-8516 (JP)
(72) Inventor: HASEGAWA Takeshi, Tokyo 130-8516 (JP)
(74) Representative: Fleuchaus, Michael A.
(86) International application number: PCT/JP2011/070924
(87) International publication number: WO 2012/039329

(57) **Abstract**

[Problem]

When the use of the handpiece ends and inspired air is stopped, the negative pressure is prevented to being generated in the turbine room by the inertia rotation of the turbine blade, and the rotation efficiency of the turbine is improved.

[Resolution approach]

An air turbine handpiece comprises: a head portion with built-in free turbine blade, a neck portion installed consecutively with the head portion and grasped by an operator, a grip portion installed consecutively with the neck portion behind thereof, an air supply duct for charging air to drive the turbine blade, and an exhaust duct for exhausting the air after rotating the turbine blade. The exhaust duct 12 is provided with a reflux duct 16 for the exhausting, one end of the reflux duct is opened to the exhaust dust as an reflux entry 19, and the other end of the reflux dust is opened to the turbine room 15 as the exhaust exit17, a value in which an aperture at the reflux exit 16 of the reflux duct 16 is divided by an aperture in the air supply port 14 of the air supply duct 11, becomes one or less, and the reflux exit 17 of the reflux duct is opened to the turbine room 15 near the air supply port 14 between the air supply port 14 and the exhaust exit17.

## Description

### Technical field:

The present invention relates to an air turbine handpiece used for dental therapeutics etc., particularly, an air turbine handpiece capable of improving the rotation efficiency of the turbine, in which when the turbine stops in case of ending use of the kind of air turbine handpiece, generation of negative pressure due to inertia rotation of the turbine blade is prevented in the turbine room and the reflux duct as a negative pressure prevention means is used as the promotion means of driving force at the time of driving the turbine again.

### Background art:

When the drive of the turbine is ended, the conventional air turbine handpiece intercepts the supply of the pressurizing air being as driving medium. However, even if the supply of the pressurized air is intercepted, the turbine blade continues the inertia rotation by own inertia force so that the air in the turbine room is exhausted by the inertia rotation, resulting in a generation of negative pressure therein. Moreover, the air in the turbine room is communicated with ambient air through the gap in surroundings of rotation axis so that interior of the turbine room becomes a negative pressure, resulting in generation of negative pressure in the turbine room. Moreover, the air in the turbine room is communicated with the ambient air through the gap in surroundings of rotation axis, so that the interior of the turbine room becomes a negative pressure, resulting in a inhalation of ambient air in the turbine room, and resulting in a inhalation of contaminant such as saliva and blood etc. of patient together with the inhalation of ambient air. As a result, the interiors of the joint metal fittings and the feed and exhaust hoses which are connected to the interior of the head portion and/or the handpiece, are polluted. In this way, when the interior of the handpiece is polluted, the cross infection might generate through the handpiece between the patient and the operator or among patients, so that in order to improve this problem, various techniques have been developed before, for example, the inventions of patent documents 1 to 7 are well-known as stated below.

The invention of the patent document 1 comprises a feed duct that supplies the compressed air from the compressed air source to the air turbine, and an exhaust duct for performing the exhaust, characterised in that the feed valve is provided to the feed duct, the exhaust valve is installed to the exhaust duct, the feed valve and the exhaust valve are closed at the end of driving of the handpiece at the same time, at the end of driving or after closing the exhaust valve, the air supply valve is closed, it is obstructed that the negative pressure generates in the handpiece, and the contaminant is prevented from being inhaled in the handpiece.

The invention of the patent document 2 comprises a turbine wheel accommodated rotatably to the inner space portion formed to the head portion of the handpiece, an air inlet for supplying air toward the turbine wheel, and an exhaust vent for exhausting air supplied to the turbine wheel, one or plurality of buffer spaces for feeding and storing air with centrifugal force given by rotation of the turbine wheel, in the pressurized condition, a path for discharging the dissolved air stored in the buffer space in the atmosphere from surroundings of the tool to rotate with the turbine wheel, and a sidewall portion existing between the turbine wheel and the exhaust vent, and positioned at the surrounding direction in order to give resister to the air moved from the turbine wheel to the exhaust vent, and thus the buffer space is opposed to the rotation direction of the vane.

Moreover, according to the handpiece of this constitution, even if the drive of the handpiece is ended and the charge is stopped, the air in the turbine room is exhausted by the inertia rotation of the turbine wheel, but the flow of air moved from the turbine wheel toward the exhaust port is obstructed by the sidewall portion that intervenes between the turbine wheel and the exhaust port, and the air rotated together with the turbine wheel is stored in the pressurized condition in the buffer space formed at the outer side of the turbine wheel based on the centrifugal force provided for air. Furthermore, the stored air is emitted from the surrounding of the tool in the atmosphere, through the air duct formed to the head portion, so that the prevention of the sack back can be enabled.

The invention of patent document 3 comprises a means for preventing the pressure medium rotated in the turbine room, from being emitted through the exhaust duct, during the inertia rotation of the bladed wheel of the turbine after the supply of the pressure medium is stopped. Particularly, in the handpiece for the medical treatment or dentistry, the above means is mounted to the region of the turbine room, in the functional operation, the pressure medium rotated in the turbine room is inclined beyond the outlet opening, and has a flow Web for forming a flow stepped portion for the pressure medium rotated by the above means, so that the pumping function, inhalation and retraction are prevented. Also, an intermediate web is located on the transversal plain of intermediate of the bladed wheel of the turbine substantially, as a result, the inlet opening portion is mounted to fit together substantially with the inlet channel existed between the intermediate web and the related sidewall portions of the turbine room, and an intermediate web is extended to the convergence direction or oblique direction, with respect of inflow direction, in the condition that a point of a round web is directed to the rotating direction, so that the power of the turbine can be increased.

The invention of patent document 4 disclose a manual dental apparatus comprising an air passage for supplying driven air to the turbine an exhaust air passage connected directly to a cylindrical surface of the turbine room, and for exhausting the air driven from the turbine room, characterised in that the exhaust air passage is opened to the region between the rotor and the bearing at tool side and near the axis of the turbine room through the connection passage, or the exhaust air passage is opened to a cylindrical wall of accommodation hole of the head wall through the connection passage, at the tool side in the bearing provided to the tool side, or the exhaust air passage is opened to the region of the axis near of the turbine room, and/or the hollow room of the tool operation mechanism at the opposite side of the tool side of the rotor near through the connection passage, so that It is prevented the ambient air from being inhaled with the negative pressure generated by the inertia rotation of the rotor, in such a manner that the connection passage connected to the exhaust air passage is opened to the region around the axis.

The invention of patent document 5 is characterized in that as an embodiment 1 the chamber of the head portion is provided with a nozzle opening for spouting air to the turbine blade portion of the above rotor, and an exhaust port for exhausting the gushed air outside, the width W of the above arc shaped nozzle opening along the direction of the circumference of the turbine blade portion is set to twice or more height H in the direction of the rotation axis of the rotor.

And, in this handpiece, a circular arc width W in the circumferential direction of the nozzle opening for jetting air toward the turbine blade portion is set to twice or more height H in the direction of the rotation axis, and, the nozzle opening is made in long circumferential shape, so that the air jetted from the nozzle opening intensively operates to the central portion in the axis direction of the turbine blade of the turbine blade portion, the area of the nozzle opening is also large, the amount of air supplying is also large, and the rotor can be rotated and driven efficiently with high torque.

Moreover, the invention of this patent document 5, as second embodiment, comprises a rotor arranged to the head portion in the chamber formed in a head portion, supported rotatably through the bearing means with the rotation axis integrally, and having tool mounted detachably, the turbine blade portion of the above rotor includes a hub portion and a plurality of turbine blades that essentially put equal intervals on the outer peripheral surface of the hub portion circumferentially, the air turbine handpiece comprises respective turbine blades including a first blade portion essentially extended convexly in a circular arc shape, in the above rotor rotating direction, and a second blade portion extending behind the rotating direction of the above rotor toward a direction away from the first blade portion and serially extending essentially to the first blade portion, the above chamber is provided with a nozzle opening for gushing the air toward the above first blade portion of the above turbine blade, and an exhaust opening for exhausting the air gushed toward the above turbine blade outside, the outer peripheral surface of the above hub portion extends inside in radial direction, in the circular arc shape, concavity toward the lower end from the upper end, the air gushed from the above nozzle opening to the first blade portion of the above turbine blade, is guided by the above first blade portion, flows behind the above rotating direction, is guided by the above second blade portion and is led downward toward and behind the above rotating direction toward a direction away from the above first blade portion, and afterwards is exhausted outside through the exhaust opening.

And, the handpiece of this construction comprises first blade portion that extends in rotor rotating direction by respective turbine blade of the rotor and essentially extends convexly in the circular arc shape, and second blade portion that essentially continues from the first blade portion, and extends behind above in rotating direction in away direction therefrom, the air from the nozzle opening is jetted toward the first blade portion of the turbine blade. Therefore, the air jetted from the nozzle opening flows behind the rotating direction along the circular arc plane of the first blade portion, further, is led to the rotating direction along the second blade portion following the first blade portion, the flow of the air that flows along the turbine blade becomes smooth. Thus, the air jetted toward the turbine blade portion flows smoothly along the turbine blade and hardly operates as a rotational resistance, and thus the rotor can efficiently be rotated and driven. Also, in this invention, the outer peripheral surface of the above hub portion extends inside in radial direction, in the circular arc shape, concavity toward the lower end from the upper end, so that the air from the nozzle opening operates to the hub portion, and can raise the rotor rotating torque.

Furthermore, as an embodiment 3 of the invention of patent document 5, the outer peripheral surface of the first portion being the upper portion of the above hub portion extends inside in radial direction, in the circular arc shape, concavity toward the lower end from the upper end, and the outer peripheral surface of the second portion being the lower side of the hub portion extends under the rotation axis direction of the above rotor. Also, this invention is characterized in that a part of air gushed from the above nozzle opening is led to the above turbine blade, after guiding it by the above first and second portions of the above hub portion. And, the handpiece of this constitution includes a first portion that the hub portion of the turbine blade essentially extends in the circular arc shaped toward the inside of the rotor radial, and a second portion that extends from the first portion to the rotor rotating direction, so that a part that operates to the hub portion of the air jetted from the nozzle opening, is led to the turbine blade along the second portion from the first portion, and operates to the turbine blade, and thus the rotor rotating torque rises.

The invention of the patent document 6 characterized in that the aperture of the exhaust vent at the inlet end of the exhaust passage is set large to the aperture of the air supply vent at the tip of the charging passage, and the air passage circling around in the housing and from the above air supply vent to the above exhaust vent, is made enlarge from the air supply vent to the exhaust vent side sequentially, further, the above turbine blade is assumed the top and bottom two connecting systems with same rotation axis, a separator is provided between two turbines, and chamber inside of the hub portion and charging passage, exhaust passage, and air passage of neck portion are divided into two systems according to respective turbines. Moreover, in addition to the above constitution, the space between the turbine blade and upper and lower internal wall surface of the chamber is made narrow, particularly, an increase in the torque that caused to rotate the cutting tool.

In the above description, as for the first turbine blade and the second turbine blade, in view of the axial direction of the rotation axis, an upper and lower interval between the turbine blade and the upper and lower internal wall surfaces of the top and bottom of the chamber, is taken narrow, so that it prevent the pressurized air jetted to the turbine blade from being spread rapidly by the gap at the above upper and lower intervals, and thus prevent the speed of the charging from being decreased. Also, for the aperture of the air supply vent of the charging passage, the aperture of the exhaust vent that circles around in the chamber of the head housing and exhausts air, is set large, the air passage from the above air supply vent to the exhaust vent has a cross-sectional area which is increased sequentially, from the air supply vent in the tip of the charging passage, and then fitted in the aperture of the exhaust passage at the exhaust vent, also, right and left intervals between a right and left outer periphery internal wall surface in the chamber and the tip of respective turbine blades, are made in such a manner that its radius of curvature is enlarged sequentially from the air supply vent to the exhaust vent.

In the handpiece of this constitution, the interior of the chamber is circled around clockwise in view of the above of head portion along the internal surface, and is exhausted, after rotating the turbine blade with shocking pressure of the pressurized air jetted from the air supply vent, at this time, the volume of the chamber being as the ventilation passage is enlarged sequentially from a starting point of the air supply vent, so that it prevents a generation of the resistor operation that decrease the air supplying speed and preclude the rotation of the turbine blade without rapidly spreading the pressurized air.
Further, in the exhaust vent, the volume of the exhaust is made identical with the exhaust passage, so that the flow of the pressurized air which circle around the interior of the chamber in the process of charging and exhausting, arrives at the exhaust vent with same aperture as the exhaust passage of the enlarged part in the chamber sequentially, and thus air density lowers sequentially, and then it can prevent the resistor operation that decreases the rotation of the turbine blade.

Further, it is assumed the connecting system of the first turbine blade and the second turbine blade, the rotation axis is assumed to be identical, and then the power of the torque is made double by the same rotational frequency. Also, the air supply and the exhaust system are divided into upper and lower two corresponding to the top and bottom two turbines, thereby reducing the damage in the air supply. Therefore, the axial side separator and the housing side separator are provided between upper and lower turbine blades, for the above-mentioned operation, the efficiency of the turbine improves large, and the torque of the rotating cutting tool can be increased.

The invention of the patent document 7 provides a rotor of the dental air turbine handpiece, this rotor is vertical to the rotation axis, and has the flywheel with a thickness that the air receiving band positioned at surroundings of the rotor blade is divided equally, the position of the flywheel may take a high position or a low position, but preferably may takes an intermediate position, and then when the intermediate position is taken, the promotion of the rotor is efficient further. Moreover, when the vertical plane of respective wedged shaped bands of the upper train, is overlapped regularly for the vertical plane of respective wedged shaped bands of the under train, It is increased the pulse formula of the rotor air for each turn, and enabled an increase at the starting speed and the maintenance of the torque in the state of the high revolution. It may shift the overlapping of the vertical plane of respective wedged shaped bands of the lower train only by a half band concerning the vertical plane of respective wedged shaped bands of the under train. Also, though the air discharging jet can utilize only by one, in order to elevate efficiency, usually one air jet is divided into 2 or plurality of jets with equal diameter or small diameter, the arrival of the pressurized air to a unified air receiving band with wedged shape is efficiently concentrated, and thus an increase at the starting speed and the maintenance of the torque in the state of high revolution, become possible.

### Prior Art Document:

### Patent documents:

Patent document 1: JP, H06-047060, A
Patent document 2: WO2006/101133 gazette
Patent document 3: JP4100833
Patent document 4: JP3907284
Patent document 5: JP3208345
Patent document 6: JP3684643
Patent document 7: JP, H01-104254, A

### Summary of the invention:

### Problem to be solved by the invention:

However, the above patent documents 1-7 have the following problems. In the case of the above patent document 1, the feed valve and the air release valve must be provided, and electric signal for operating the exhaust valve (the electric signal for operating solenoid-controlled valve)or the air signal (the air signal for operating the air valve) must be needed. Also, in order to operate the above circuit more effectively, after shutting the exhaust valve, it should be operated to shut the air supply valve, the control circuit operated in this order becomes indispensable.
Additionally, the addition of the component and the circuit is necessary, and it becomes the cost up. Furthermore, this circuit is applied to the product newly shipped by the factory, and there is a problem that it is not easy to correspond to the conventional product of the market.

In the case of the patent document 2, it necessary to provide an air supply vent for supplying air to the turbine wheel in head portion of handpiece, an exhaust vent of the supplied air, a buffer space for accepting and storing in pressurized condition, the air imparted the centrifugal force by rotating the turbine wheel in the head portion, and a circumferential shaped sidewall portion imparted resistor to air flowed from the turbine wheel to the exhaust vent, and positioned between the turbine wheels and exhaust head. And, in order to produce the effect effectively, the buffer space is opened oppositely in the rotating direction of the turbine wheel, resulting in a prevention of the sack buck, so that the structure complicates and is complex, and thus it becomes cost up.

In the case of the patent document 3, the outlet opening portion placed at the region of the turbine room, the flow recess connected with the outlet opening portion, and the machining of Web, are complex and it is becoming the cost up. And, as for the arrangement of a middle web positioned substantially at the transversal planar of intermediate of the bladed wheel of turbine, and an inlet opening portion or the related sidewall portion of turbine room, the round web tip of the intermediate web is extended to the convergence direction or oblique for the inflow direction in the state directed to the direction of the rotation, thereby increasing the power of the turbine, but this is a thought that the positional relation between the shape of middle web and the passage connected with the inlet opening portion and the outlet opening portion, makes a smooth flow and thus it is effective, but the extent of "increase of power" is not shown. Moreover, it becomes a very complex machining and becomes further cost up that the intermediate Web of the bladed wheel of turbine is provided.

In the case of the patent document 4, there is not easy the machining of the connection passage opened in the region around the axis and is communicated with the exhaust air passage, and there is a problem of becoming the cost up as described above. Moreover, though the present invention is a similar constitution to the invention of the present application, it is different from the invention of the present application, the connection passage communicated with the effluent air passage is opened to the region around the axle etc. remote from the negative pressure generation portion of the turbine room, the generation of the negative pressure is not inhibited directly, the influence of the generated negative pressure is relaxed, moreover, the processing cost is bulky from constructional and thus it is a quite different constitution from the present invention.

The embodiment 1 of the patent document 5 intends the rotor to rotate and drive with the high torque by efficiently applying the air (in the flow direction) gushed toward the turbine blade portion of the rotor to plural turbine blades, however, the width W of the nozzle opening for gushing the air toward the turbine blade portion must be set to twice or more height H in the direction of the rotation axis line of the rotor, opening portion of usual nozzle diameter 1.0mm to 1.5mm extent is made widened to twice or more the above height H (usually 3.0mm to 3.5mm extent), so that the machining is not easy, and thus there is a problem of becoming the cost up similarly to the above.

In the second embodiment, the air jetted from the nozzle opening flows behind the rotating direction along the circular arc plane of the first blade portion, it is led in the direction of the rotation along the second blade portion following the first blade portion, and flows along the turbine wing so that the flow of the air becomes smooth. Thus, the air jetted to the turbine blade portion flows smoothly along the turbine blade, and it hardly operates as a rotational resistance, so that the rotor can be efficiently rotated and driven. Moreover, the outer peripheral surface of the above hub portion extends inside in radial direction, in the circular arc shape, concavity toward the lower end from the upper end, so that the air from the nozzle opening operates to the hub portion, and can raise the rotor rotating torque. Such a shape of rotor (consisting of respective turbine blades) is constructed by the three-dimensional (substantial third-dimensional) machining, so that the complexity of the machining and the machining programming of the rotor is hard to describe. Further, it is easy to imagine that a lot of machining time is spent, and becomes the big cost up.

According to the third embodiment, a part where the operation works to the hub portion, of the air jetted from the nozzle opening, is led to the turbine blade along the second part from the first part the, and operates to the turbine blade and thus contributes to the rotor rotating torque, so that the rotor rotating torque can be raised. In this case, the shape of the rotor consisting of a respective turbine blade not only has a three-dimensional (substantial three-dimensional) shape in the same way as the above, but also, has constituted from the turbine blade group in two upper and lower stages, and then the lower step becomes like the minor diameter of screw (substantial reverse-cone), so that the machining and the machining programming of the rotor is hard to describe. Furthermore, it is easy to imagine that a lot of machining times are spent, and it becomes the big cost up.

In the case of the patent document 6, the exhaust passage should be machined so as to expand the curvature radius sequentially from the air supply vent and to arrive at the exhaust vent, and while decentering sequentially the inner wall (chamber) of almost cylindrical shaped head against the center of the head (rotor rotation axis), the exhaust passage should be formed, it is clear that the machining is complex compared with the invention of the present application. Furthermore, in the case that the first turbine wing and the second turbine wing are made as the connecting system, it proposes to divide the charging air system and the exhaust system into upper and lower two, corresponding to the top and bottom two turbines, and thus an addition of the exhaust system is to increase the machining number of man-hours, and it becomes the cost up.

In the case of patent document 7, the main subject of the invention is the matter that an increase at the starting speed and maintenance of the torque in the state of the high revolution are possible, and so-called "Flywheel" was incorporated in a part of the rotor. Thus, this is different from the matter that the rotation driving force of the air turbine handpiece of the present application is enhanced, and the energy-saving effectiveness is effected.

Therefore, the present invention was developed to provide the air turbine handpiece by considering the problems in the above patent documents 1 to 7, in such a manner that even if the air charge is stopped at the turbine-drive ending of the handpiece, the turbine blade is effected to drive with the inertia rotation, so that in order to prevent the negative pressure from being generated in the turbine room, the negative pressure prevention means is provided to reflux the exhaust to the turbine room, and the exhaust is refluxed to the turbine room during the usual turbine-drive other than at the time of the negative pressure prevention, at the same time, the rotation driving force of the turbine blade can be enhanced, by jetting the reflux exhaust stream in the above negative pressure prevention means together with the air charge jetted toward the turbine blade.

That is, the present applicant has proposed the invention previously in Patent Application No. 2010-211589, in order to resolve the problem that even if the air charge for driving the turbine is stopped, the negative pressure is caused in the turbine room by the inertia rotation of the turbine blade, and the contaminant of saliva and blood etc. of the patient are inhaled in the head portion by the negative pressure together with the ambient air, we prevented the negative pressure from being generated in the above turbine room, and in the time of driving the turbine commonly, the rotation driving force of the turbine is promoted, and the secondary effect for reinforcing the rotation driving force of the turbine blade can be obtained. Therefore, afterwards, the present inventor advances a development further in relation to the implement of the above invention, as the result of the fact that the reflux duct of the exhaust as being the above negative pressure prevention means may be utilized positively as a rotation driving force of the turbine blade, the exhaust after the turbine-drive is refluxed to the turbine room through the reflux duct of the above negative pressure prevention means, at the same time, the air charge is jetted to the turbine blade, as a result, the present inventor confirmed the fact that the driving force was able to be improved remarkably.

### Summary of the invention:

The invention of claim 1 according to the present invention is an air turbine handpiece comprising a head portion forming therein a turbine room, in which a rotatable turbine blade is provided; a neck portion installed consecutively with the head portion and grasped by an operator; a grip portion installed consecutively with the neck portion behind thereof an air supply duct for charging air from an air supply port to drive the turbine blade; and an exhaust duct for exhausting the air from the exhaust vent after rotating the turbine blade by the charged air; characterised in that the exhaust duct is provided with a reflux duct for the exhausting, one end of the reflux dust is opened to the exhaust dust as an reflux entry, and the other end of the reflux dust is opened to the turbine dust as the exhaust exit.

The invention of claim 2 according to the present invention is an air turbine handpiece as claimed in claim 1, charecterised in that the reflux duct is constituted in such a manner that a value in which an aperture at the reflux exit of the reflux duct is divided by an aperture in the air supply port of the air supply duct, becomes one or less, and the reflux exit of the reflux duct is opened to the turbine room near the air supply port between the air supply port and the exhaust exit.

The invention of claim 3 according to the present invention is an air turbine handpiece as claimed in claim 1, charecterised in that the reflux duct is constituted in such a manner that when the aperture in the air supply port of the air supply duct is assumed to be D0, and the aperture at the reflux exit is assumed to be D1, the aperture at the reflux exit of the reflux duct is set as D0:D1 =1:0.62 to 0.92, and the reflux exit of the reflux duct is opened to the turbine room near the air supply port between the air supply port and the exhaust exit.

The invention of claim 4 according to the present invention is an air turbine handpiece as claimed in claim 3, charecterised in that the reflux duct is constituted in such a manner that when the aperture in the air supply port of the air supply duct is assumed to be D0, and the aperture at the reflux exit is assumed to be D1, the aperture at the reflux exit of the reflux duct is set as D0:D1 =1:0.77, and the reflux exit of the reflux duct is opened to the turbine room near the air supply port between the air supply port and the exhaust exit.

The invention of claim 5 according to the present invention is an air turbine handpiece as claimed in any one of claims 1 to 4, charecterised in that the reflux duct is installed consecutively with another reflux duct through the reflux entrance for exhausting opened to the exhaust tube, and the reflux exit of the reflux duct is opened to the turbine room of the air supply port near in the tip of the nozzle installed consecutively to the exit side of the air supply duct.

The invention of claim 6 according to the present invention is an air turbine handpiece comprising a head portion forming therein a turbine room, in which a rotatable turbine blade is provided; a neck portion installed consecutively with the head portion and grasped by an operator; a grip portion installed consecutively with the neck portion behind thereof; an air supply duct for charging air from an air supply port to drive the turbine blade; and an exhaust duct for exhausting the air from the exhaust port after rotating the turbine blade by the charged air; characterised in that the air supply duct is install consecutively with a nozzle, and the exhaust duct is provided with a reflux duct, one end of the reflux duct is opened to the exhaust duct as an reflux entry, and the other end of the reflux duct is opened to near the air supply port of the nozzle as an exhaust exit.

### Effect of the invention:

In the air turbine handpiece according to the present invention, one end of the reflux duct is communicate with the exhaust tube and the other end of the reflux duct is opened to the turbine room near the air supply port of the air supply duct, so that the exhaust is returned directly to the portion where the negative pressures are caused easily most in the turbine room, and the negative pressure can be prevented from being generated efficiently by the refluxed exhaust. As a result, the foreign material can be prevented from being inhaled in the handpiece when the negative pressure is generated in the air turbine handpiece, and the cross infection between patient and operator or among patients can be prevented from being generated through the air turbine handpiece. Also, in the air turbine handpiece according to the present invention, the reflux duct communicated with the exhaust duct is provided near the air supply port of the air supply duct, and the exhaust is returned directly to the portion of the turbine room where the negative pressures are caused most in turbine room, so that the negative pressure can be prevented from being generated by the refluxed exhaust. Furthermore, in the case of using the air turbine handpiece, the reflux air supplied from the reflux duct is jetted toward the turbine blade together with the supplied air of the original driving force, so that the secondary effect that the rotation drive of the turbine blade can be helped, can also be obtained. Moreover, the constitution of the reflux duct is simple, and the machining is also easy, so that the air turbine handpiece can be provided with low price. As a result, present invention has an advantage that the cross infection between patient and operator or among patients can be prevented from being generated through the conventional air turbine handpiece. Particularly, also, according to the present invention, a value in which an aperture at the reflux exit of the reflux duct is divided by an aperture in the air supply port of the air supply duct, is set to one or less (≧ 1) , so that during use of the air turbine handpiece, in addition to the air charge jetted from the air supply duct toward the turbine blade, the supply quantity of air increases by the reflux exhaust supplied to the negative pressure generation portion of turbine room through the reflux duct, and thus the rotation driving force of the air turbine handpiece is reinforced and the energy-saving effect can be obtained. Moreover, the constitution of the reflux duct according to the present invention is simple, and the machining is easy, so that the air turbine handpiece can be provided with the low price.

### Brief description of the drawings:

Fig. 1 shows first embodiment of an air turbine handpiece according to the present invention, and
Figs. 1(a),(b) are a vertical cross-sectional view and a cross-sectional view showing the constitution of the reflux duct opened toward the turbine room near at the air supply port,
Fig. 2 is an operational explanatory view of the reflux in the air turbine handpiece of the first embodiment,
Fig. 3 is a diagram showing the rotational speed and the power of the refluxed turbine-drive as for the exhaust in the air turbine handpiece of the first embodiment,
Fig. 4 is a diagram showing the reflux duct aperture and the power of the refluxed turbine-drive as for the exhaust in the air turbine handpiece of the first embodiment,
Fig. 5 shows second embodiment of the air turbine handpiece according to the present invention, and
Figs. 5(a),(b) are a vertical cross-sectional view and a cross-sectional view showing the constitution of the reflux duct opened toward the turbine room near at the air supply port,
Fig. 6 is an operational explanatory view of the reflux in the air turbine handpiece of the second embodiment,
Fig. 7 is a perspective view showing external appearance of the entire air turbine handpiece.

### Best mood for carrying the preferred embodiment:

Even if inspired air for the drive is stopped to stop the drive of the air turbine handpiece, the object of preventing negative pressure from being generated in the turbine room by inertia rotation of the turbine blade, can be achieved with a simple constitution, by providing the reflux duct in such a manner that one end as reflux entry is opened to the exhaust tube and the other end as reflux exit is opened to the turbine room near the air supply port of the air supply port. Moreover, the object that the rotation driving force of the handpiece is reinforced and energy-saving effect is attempted, can be achieved by setting a value in which an aperture at the reflux exit of the reflux duct is divided by an aperture in the air supply port of the air supply duct, becomes one or less (≧1).

### First embodiment:

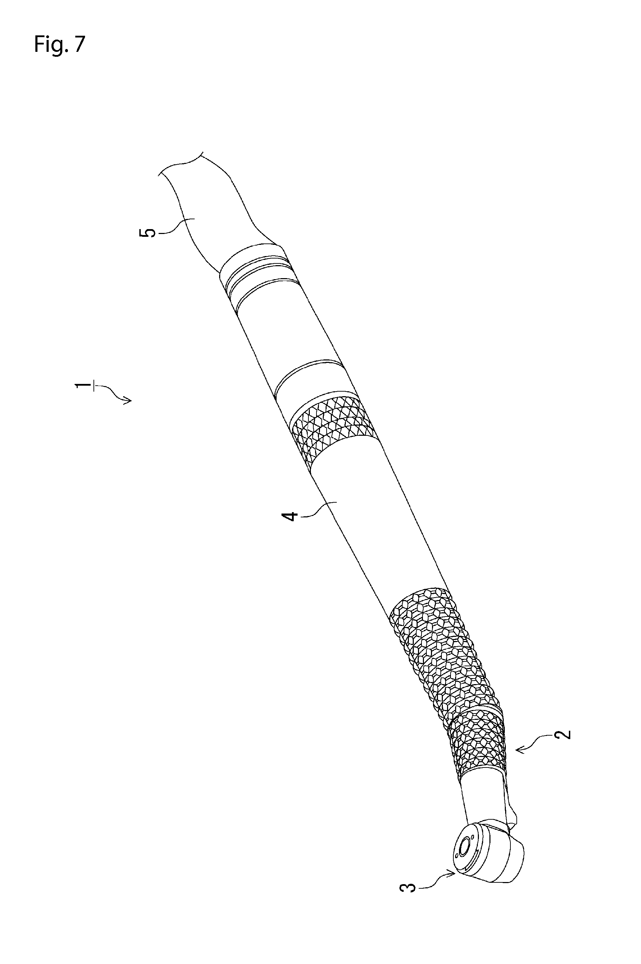

As shown in the Fig. 7, an air turbine handpiece 1 of this embodiment that applies the present invention comprises a neck portion 2 grasped by an operator, a head portion 3 installed consecutively to the tip side of the neck portion 2, and a grip portion 4 installed consecutively behind the neck portion 2, and a hose 5 with built-in feed pipe and exhaust pipe (not shown) is connected with the rear end of the grip portion 4.

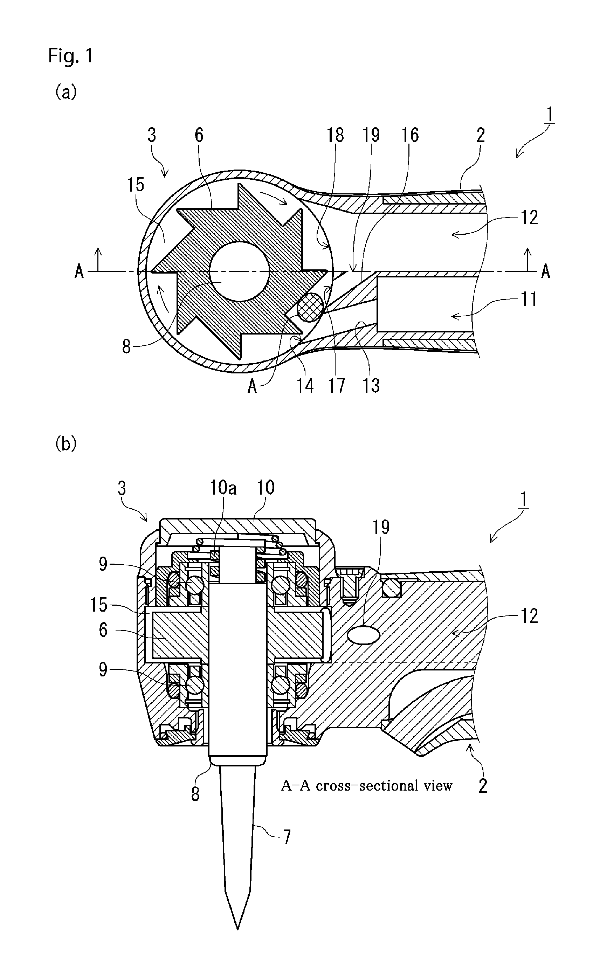

As shown in Fig. 1, a turbine room 15 is formed in the interior of the head portion 3 of the air turbine handpiece 1, and a turbine blade 6 is fixed to a chuck 8 that supports a tool 7, in interior of the turbine room 15, and is rotatably supported by ball bearings 9 of one pair of upper and lower sides through the chuck 8. Moreover, on the upper end of the chuck 8, the tool 7 is constructed detachably by compressing a pushbutton 10 against energisation of a spring 10a. Furthermore, at the side of the neck portion 2 of the head portion 3, an air supply line 11 for rotating the turbine blade 6 and an exhaust duct 12 for exhausting air after the turbine blade 6 is rotated, are provided, and additionally, a nozzle 13 is installed consecutively to the exit side of the air supply line 11, so that air is jetted from an air supply port 14 formed to the tip of the nozzle 13 toward a turbine room 15.

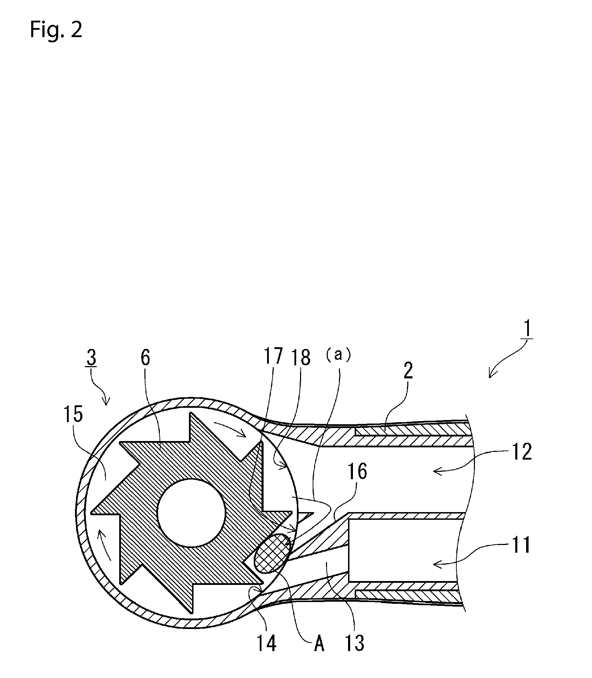

In this embodiment, a reflux duct 16 is installed consecutively to the exhaust duct 12 through a reflux entry 19 for exhausting, in the above constitution, and a reflux exit 17 of the other end of the reflux duct 16 is opened in the turbine room 15 near the air supply port 14 of the air supply line duct 11. According to the air turbine handpiece 1 of the above constitution, in the case of stopping the air supply with the air supply duct 11, as shown in Fig. 2 by an arrow (a), a part of exhaust flowed into the exhaust duct 12 flows from the reflux exit 17 into the area A of the air supply port 14 in the turbine room 15 near through the reflux duct 16. The area A is a portion where the negative pressures are generated easily most when inspired air is stopped, by refluxing the exhaust in this area A directly, so that the negative pressure can be efficiently prevented from being generated. Furthermore, during the turbine-drive of the air turbine handpiece 1, supply air jetted from the air supply port 14, that is, the reflux exhaust in addition to the pressurizing charge flows into the turbine room 15 of the air supply port near through the reflux duct 16, so that the air supply quantity increases, and the rotation driving force of the turbine is reinforced. As a result, the energy-saving efficacy can be effected.

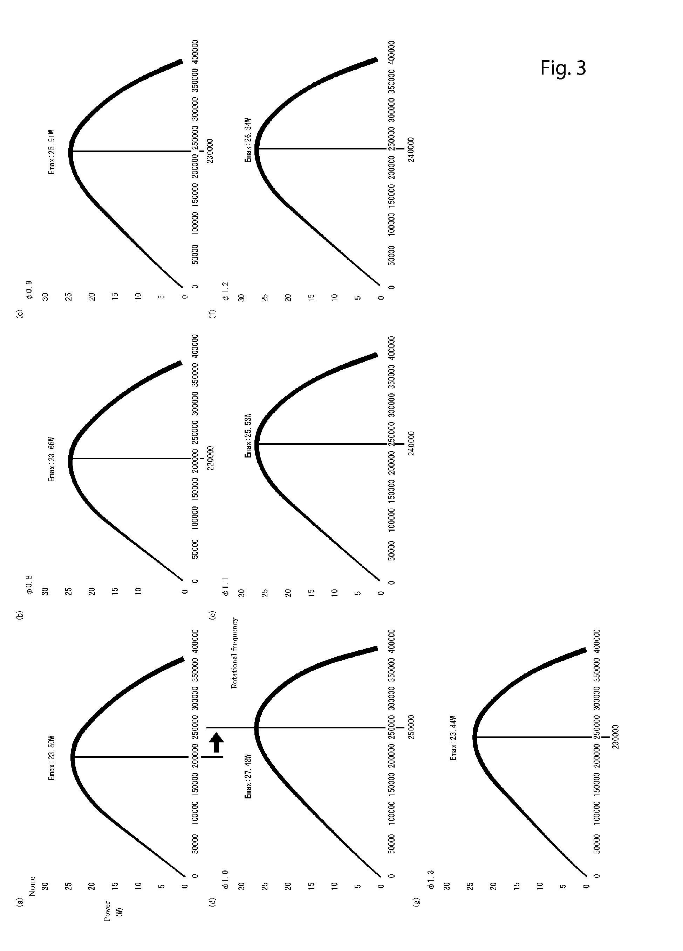

However, as to the reinforcement of the rotation driving force, the followings are examined; the explanation thereof is as follows. As an example, in case that the diameter of the air supply port 14 in Fig. 1 is made 1.3mm, in the diagram showing Figs. 3(a) to (g), in which the power is taken as ordinates and the cycle is taken as abscissas, (a) is a case that reflux duct 16 is not installed, and the highest power 23.50W is shown by 200,000 rotations of the turbine. On the other hand, hereinafter, there is shown the relation between the highest power and the cycle in the case that the reflux duct 16 was installed. 23.66W every 220,000 rotations in (b). 25.91W every 230,000 rotations in (c). 27.48W every 250,000 rotations in (d). 25.53W every 240,000 rotations in (e). 26.34W every 240,000 rotations in (f). 23.44W every 230,000 rotations in (g). In each air turbine handpiece where the reflux duct diameter was changed, the pressure in hand at the no-load running is set to 0.22MPa (2.2bar), so that the supply quantity of air is not constant, and is a tendency to decrease. It could identify an effect to which by installing the reflux duct 16 and returning the exhaust to the turbine room 15, the amount of the supply air increases, consequently, the cycle increases from 200,000 to 250,000 rotations, and as show by an arrow in Fig. 3, the power could be remarkably improved.

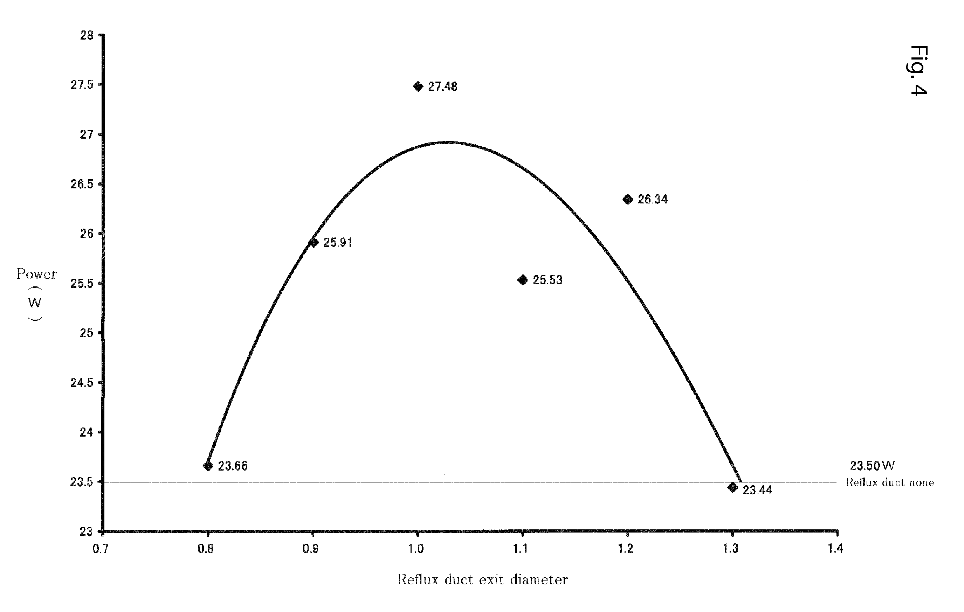

Moreover, in the case that the diameter of the air supply port 14 in Fig. 1 is made 1.3mm, in the diagram shown in Fig. 4, in which the power is took as ordinates and the diameter of exit at the reflux duct is took as abscissas, the maximum work becomes 23.50W in the air turbine handpiece 1 of the old model that do not form the reflux duct 16 therein. It shows the effect that in the air turbine handpiece of the present application in which the reflux duct 16 is formed, the work becomes a maximum which is 26.95W, near the diameter 1mm of the reflux exit 17 of the reflux duct 16, and the power increased remarkably. On the other hand, it shows the effect that in the air turbine handpiece of the present application in which the reflux duct 16 is formed, the work becomes a maximum which is 26.95W, near the diameter 1mm of the reflux exit 17 of the reflux duct 16, and the power increased remarkably.

As is seen from the above-described result, as to the reflux exit 17 of the reflux duct 16, the effect is seen from 0.8mm to 1.2mm of the diameter relative to the diameter of 1.3mm in the air supply port 14, and the effect shows a tendency to decrease gradually in the ranges of 0.8mm or less and 1.2mm or more. Also, it turned out that the diameter of the air supply port is made preferably, 1.0mm to 1.2mm among 0.8mm to 1.2mm, most preferably, 1.0mm.

Thus, in the case that the height of the turbine blade in the present invention is made 3mm, and a diameter of air supply port is made 1.3mm, as a diameter of the reflux exit by which the rotation driving force is efficiently enhanced, the reflux exit diameter is made 1.0mm to 1.2mm, preferably, 1.0mm. If this is represent by an aperture ratio, it became the most preferable result that a value in which an aperture of the reflux exit is divided by an aperture in the air supply port, becomes one or less, effectively 0.62-0.92, and 0.77 most preferably.

Moreover, if a diameter of the air supply aperture is made smaller than 1.3mm according to the capacity of the turbine room 15, it is common knowledge in the same business that the rotating speed goes up too much. That is, if it is an aperture that the air supply of an extent where rotating speed of turbine blade 6 does not go up too much, that is, an extent where noise does not grow, becomes possible, the diameter of the air supply port cannot be limited to the above aperture thereof. Also, if the diameter of the air supply port is enlarged oppositely than 1.3mm oppositely, it has misgivings about that the rotating speed 300000rpm-400000rpm, preferably, 350000rpm-400000rpm of the turbine blade 6, cannot be obtained. However, in case that a constant flow rate (desired rotating speed) can be kept, even if diameter of the air supply port is larger than 1.3mm, the diameter of the air supply port cannot be limited to the above aperture thereof.

Therefore, according to the air turbine handpiece of the present invention, in the case of stop of the air supply, the exhaust is returned to the turbine room 15 nears the air supply port 14, and thus the negative pressure can be efficiently prevented from being generated in the turbine room. Moreover, during the turbine-drive, in addition to the charge jetted from the air supply duct 11 to the turbine room15, the exhaust is returned to the turbine room, so that the amount of the air supplied to the turbine room 15 increases, and the rotation driving force of turbine blade 6 is reinforced. As a result, the energy-saving efficiency can be affected. Moreover, the reflux of the exhaust in the case of stop of turbine drive, is not limited to the above description, and can also be returned to the air supply port 14 nears. Also, the diameters of the air supply line 11 and the reflux duct 16 are not limited to the above description. Also, the structure is simple and can also be provided inexpensively.

### Second embodiment:

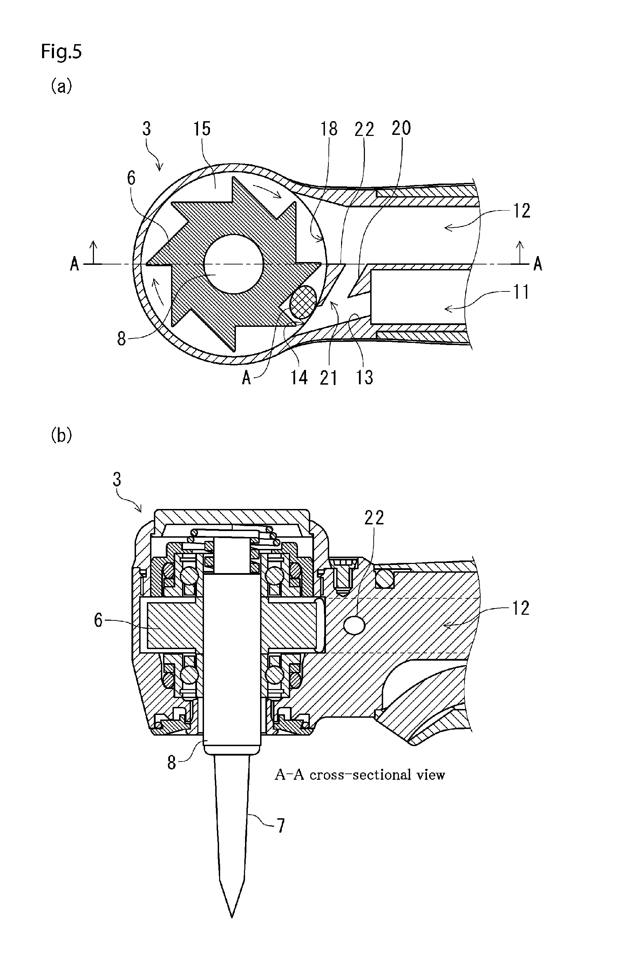

Fig. 5 shows second embodiment of an air turbine handpiece of the present invention. As shown in Figs. 5 (a) and (b), in an air turbine handpiece 1 according to the present embodiment 2, is constructed in such a manner that instead of the fact that the reflux exit 17 of the reflux duct 16 is opened to the air supply port 14 near the air supply duct 11 in the above first embodiment, the reflux exit 21 of the reflux duct 20 communicated with the reflux entry 22 opened to the exhaust duct 12, is opened to near the air supply port 14 in the nozzle 13 of the air supply duct 11 near.

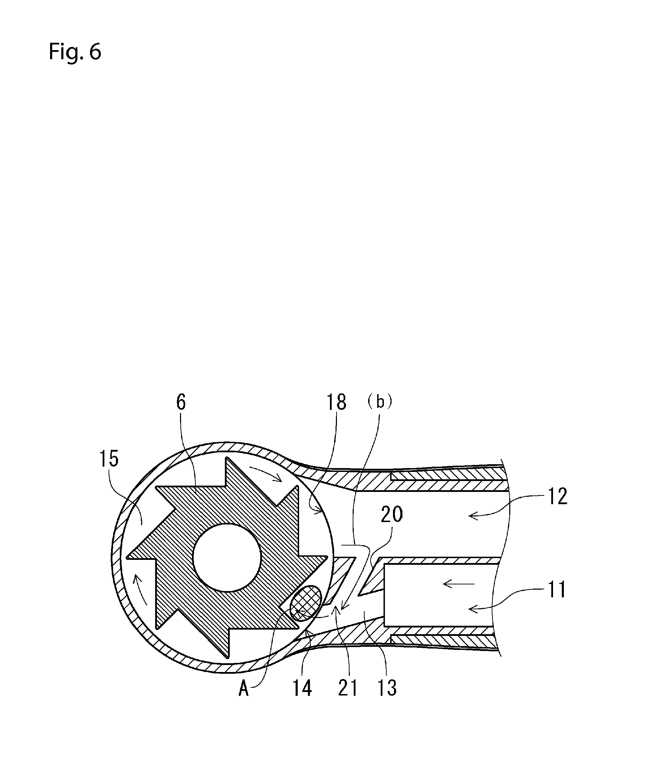

In this case, when the supply of air from the air supply duct 11 is stopped, as shown in Fig. 6 by an arrow (b), the exhaust air exhausted by the inertia rotation of turbine blade 6 is entered in the nozzle 13 from the reflux exit 21 through the reflux entry 22 of reflux duct 20, and is flowed to the area A of the turbine blade 6. As a result, although in the case of present embodiment, the operational advantage similar to above first embodiment can be effected. Furthermore, in case of using the air turbine handpiece 1, the reflux exhaust flows into the nozzle 13, and is jetted into the turbine room 15 together with the pressurized charge, so that it will become help by which the reflux exhaust rotates and drives the turbine blade 6, and thus the secondary advantage can be effected.

According to the air turbine handpiece 1 of present embodiment 2, from the above, after the supply of the dissolved air from the air supply duct 11 is stopped, the turbine blade 6 rotates through inertia, so that even if the air in the turbine room 15 is sent into the exhaust port 18 and the negative pressure starts being generated near in the air supply port 14, this air flows into the area A being the negative pressure generation portion through the exhaust duct 16, and thus the negative pressure is canceled. Moreover, during use in the handpiece 1, the reflux air flows from the reflux duct 20 into the nozzle 13 of the air supply duct 11, and flows into the turbine blade 6 together with the dissolved air, so that the negative pressure is canceled. Moreover, during use in the handpiece 1, the reflux air flows from the reflux duct 20 into the nozzle 13 of the air supply duct 11, and jets toward the turbine blade 6 together with the dissolved air. As a result, the secondary efficiency that the rotation of turbine blade 6 can be helped can be effected.

To explaining in full as to help of the rotation, the reflux duct 16 is formed more thinly than the nozzle 13 connected to the air supply duct 11, and is opened to the interior of the nozzle 13 in the slope direction along the direction of the airflow, so that the negative pressure is generated at the reflux exit 21 by the dissolved air passed through the interior of the nozzle 13 with high speed, and thus the air in the reflux duct 20 is drawn in the nozzle 13. As a result, the refluxed air is jetted from the air supply port 14, in addition to the supplied and pressurized air,
Moreover in the above description, in case of stopping the supply of air, the exhaust only has to be returned nears the air supply port 14, so that the diameter of the reflux duct 20 and mounting angle to the nozzle are not limited to the above description. Therefore, the structure of the air turbine handpiece 1 according to the present invention is simple and can be provided inexpensively.

### Explanations of letters or numerals:

- 1.: Air turbine handpiece
- 2.: Problem portion
- 3.: Head portion
- 4.: Grip portion
- 5.: Hose
- 6.: Turbine blade
- 7.: Tool
- 8.: Chuck
- 9.: Ball bearing
- 10.: Pushbutton
- 11.: Air supply tube
- 12.: Exhaust tube
- 13.: Nozzle
- 14.: Air supply port
- 15.: Turbine room
- 16.: Reflux duct line
- 17.: Reflux exit 18. Exhaust vents
- 19.: Reflux exit
- 20.: Reflux entrance
- 21.: Reflux exit
- 22.: Reflux entrance

## Claims

1. Air turbine handpiece comprising a head portion forming therein a turbine room, in which a rotatable turbine blade is provided; a neck portion installed consecutively with the head portion and grasped by an operator; a grip portion installed consecutively with the neck portion behind thereof; an air supply duct for charging air from an air supply port to drive the turbine blade; and an exhaust duct for exhausting the air from the exhaust vent after rotating the turbine blade by the charged air; **characterized in that** the exhaust duct is provided with a reflux duct for the exhausting, one end of the reflux dust is opened to the exhaust dust as an reflux entry, and the other end of the reflux dust is opened to the turbine dust as the exhaust exit.

2. Air turbine handpiece as claimed in claim 1, **characterized in that** the reflux duct is constituted in such a manner that a value in which an aperture at the reflux exit of the reflux duct is divided by an aperture in the air supply port of the air supply duct, becomes one or less, and the reflux exit of the reflux duct is opened to the turbine room near the air supply port between the air supply port and the exhaust exit.

3. Air turbine handpiece as claimed in claim 1, **characterized in that** the reflux duct is constituted in such a manner that when the aperture in the air supply port of the air supply duct is assumed to be D0, and the aperture at the reflux exit is assumed to be D1, the aperture at the reflux exit of the reflux duct is set as D0:D1 =1:0.62 to 0.92, and the reflux exit of the reflux duct is opened to the turbine room near the air supply port between the air supply port and the exhaust exit.

4. Air turbine handpiece as claimed in claim 3, charecterised in that the reflux duct is constituted in such a manner that when the aperture in the air supply port of the air supply duct is assumed to be D0, and the aperture at the reflux exit is assumed to be D1, the aperture at the reflux exit of the reflux duct is set as D0:D1 =1:0.77, and the reflux exit of the reflux duct is opened to the turbine room near the air supply port between the air supply port and the exhaust exit.

5. Air turbine handpiece as claimed in any one of claims 1 to 4, charecterised in that the reflux duct is installed consecutively with another reflux duct through the reflux entrance for exhausting opened to the exhaust tube, and the reflux exit of the reflux duct is opened to the turbine room of the air supply port near in the tip of the nozzle installed consecutively to the exit side of the air supply duct.

6. Air turbine handpiece comprising a head portion forming therein a turbine room, in which a rotatable turbine blade is provided; a neck portion installed consecutively with the head portion and grasped by an operator; a grip portion installed consecutively with the neck portion behind thereof; an air supply duct for charging air from an air supply port to drive the turbine blade; and an exhaust duct for exhausting the air from the exhaust port after rotating the turbine blade by the charged air; **characterised in that** the air supply duct is install consecutively with a nozzle, and the exhaust duct is provided with a reflux duct, one end of the reflux duct is opened to the exhaust duct as an reflux entry, and the other end of the reflux duct is opened to near the air supply port of the nozzle as an exhaust exit.
